# EUROPEAN PATENT SPECIFICATION

(11) **EP 3 482 345 B1**
(45) Date of publication and mention of the grant of the patent: **08.12.2021**
(21) Application number: 18830326.7
(22) Date of filing: 01.09.2018
(51) Int. Cl.: G06K 9/00, G06F 21/32

(54) **IMPLEMENTATION OF BIOMETRIC AUTHENTICATION WITH DETECTION AND DISPLAY OF AN ERROR INDICATION**
DURCHFÜHRUNG DER BIOMETRISCHEN AUTHENTIFIZIERUNG MIT ERFASSUNG UND ANZEIGE EINER FEHLERMELDUNG
MISE EN OEUVRE D'UNE AUTHENTIFICATION BIOMETRIQUE AVEC DETECTION ET AFFICHAGE D'UNE INDICATION D'ERREUR

(30) Priority: 09.09.2017 US 201762556413 P; 11.09.2017 US 201762557130 P; 22.09.2017 DK PA201770712; 22.09.2017 DK PA201770713; 22.09.2017 DK PA201770714; 22.09.2017 DK PA201770715; 02.11.2017 US 201762581025 P; 26.01.2018 WO PCT/US2018/015603; 12.02.2018 US 201815894221; 23.02.2018 US 201815903456; 03.06.2018 US 201862679955 P; 12.06.2018 DK PA201870371; 12.06.2018 DK PA201870370
(43) Date of publication of application: 15.05.2019
(60) Divisional application: 19160348.9
(73) Proprietor: Apple Inc., Cupertino, CA 95014 (US)
(72) Inventor: VAN OS, Marcel, Cupertino California 95014 (US); ABBASIAN, Reza, Cupertino California 95014 (US); ANTON, Peter D., Cupertino California 95014 (US); BEHZADI, Arian, Cupertino California 95014 (US); BERNSTEIN, Jeffrey Traer, Cupertino California 95014 (US); DASCOLA, Jonathan R., Cupertino California 95014 (US); DE VRIES, Nathan, Cupertino California 95014 (US); DEVINE, Lynne, Cupertino California 95014 (US); DRYER, Allison, Cupertino California 95014 (US); DYE, Alan C., Cupertino California 95014 (US); FOSS, Christopher Patrick, Cupertino California 95014 (US); GRIFFIN, Bradley W., Cupertino California 95014 (US); IVE, Jonathan P., Cupertino California 95014 (US); LEMMENS, Cas, Cupertino California 95014 (US); MALIA, Joseph A., Cupertino California 95014 (US); MARI, Pedro, Cupertino California 95014 (US); MOHSENI, Daamun, Cupertino California 95014 (US); MOUILLESEAUX, Jean-Pierre M., Cupertino California 95014 (US); MOUSSETTE, Camille, Cupertino California 95014 (US); PAUL, Grant, Cupertino California 95014 (US); PRESTON, Daniel Trent, Cupertino California 95014 (US); PUGH, Chelsea E., Cupertino California 95014 (US); SHARMA, Praveen, Cupertino California 95014 (US); TYLER, William M., Cupertino California 95014 (US); VERWEIJ, Hugo, Cupertino California 95014 (US); YERKES, Giancarlo, Cupertino California 95014 (US); YING, Charles H., Cupertino California 95014 (US)
(74) Representative: COPA Copenhagen Patents
(86) International application number: PCT/US2018/049289
(87) International publication number: WO 2019/033129

(56) References cited:
- EP-A1- 2 713 298
- EP-A1- 2 713 298
- EP-A1- 3 076 334
- US-A1- 2014 344 896
- US-A1- 2014 344 896
- US-A1- 2015 363 632
- US-A1- 2015 363 632
- US-A1- 2016 294 557
- US-A1- 2016 308 859
- US-A1- 2016 308 859
- US-B1- 8 254 647

## Description

### FIELD

The present disclosure relates generally to biometric authentication, and more specifically to interfaces and techniques for enrollment and authentication of biometric features.

### BACKGROUND

Biometric authentication, for instance of a face, iris, or fingerprint, using electronic devices is a convenient and efficient method of authenticating users of the electronic devices. Biometric authentication allows a device to quickly and easily verify the identity of any number of users.
US 2015/363632 A1 discloses a mobile terminal, which determines whether received touch input is touch input by a finger of a user and, when a function executed by the touch input requires authentication, provides a user interface necessary for authentication differently according to whether the touch input is touch input by the user's finger.
EP 2 713 298 A1 discloses a method for operating a display apparatus including acquiring biometric information about a user through a camera or a sensor unit, comparing the acquired biometric information with pre-stored authentication information, and switching the display apparatus to a first mode, if the acquired biometric information does not match with the pre-stored authentication information, the first mode restricting access to content predetermined from total content.
US 2014/344896 A1 discloses a method of using an electronic device. The method includes comparing, when a request for an access to a resource of the electronic device is identified, a reliability level of a user and a security level of the resource and permitting the access to the resource when the reliability level is equal to or higher than the security level of the resource.

### BRIEF SUMMARY

Some techniques for implementing biometric authentication using electronic devices, however, are generally cumbersome. For example, some existing techniques, such as those directed to facial recognition, require a user to almost perfectly align a biometric feature in a same manner during both enrollment and each iteration of authentication. Deviation from the alignment of the biometric feature often results in a false negative result. As a result, a user is, optionally, required to unnecessarily perform multiple iterations of biometric authentication, or is, optionally, discouraged from using the biometric authentication altogether. As another example, some existing techniques rely solely on a two-dimensional representation of a biometric feature. As a result, authentication of a user is, optionally, limited by virtue of a failure to analyze one or more three-dimensional characteristics of the biometric feature and also optionally requires a user to unnecessarily perform additional iterations of biometric authentication. In view of the foregoing drawbacks, existing techniques require more time than necessary, wasting both user time and device energy. This latter consideration is particularly significant in the operation of battery-operated devices.

Accordingly, the present technique provides electronic devices with faster, more efficient methods and interfaces for implementing biometric authentication. Such methods and interfaces optionally complement or replace other methods for implementing biometric authentication. Such methods and interfaces reduce the cognitive burden on a user and produce a more efficient human-machine interface. For battery-operated computing devices, such methods and interfaces conserve power and increase the time between battery charges. Such methods and interfaces also reduce the number of unnecessary, extraneous, or repetitive input required at computing devices, such as smartphones and smartwatches.
The invention is defined by the independent claims. The dependent claims define advantageous embodiments.

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

Thus, devices are provided with faster, more efficient methods and interfaces for implementing biometric authentication, thereby increasing the effectiveness, efficiency, and user satisfaction with such devices. Such methods and interfaces optionally complement or replace other methods for implementing biometric authentication.

### DESCRIPTION OF THE FIGURES

For a better understanding of the various described examples, reference should be made to the Description of Embodiments below, in conjunction with the following drawings in which like reference numerals refer to corresponding parts throughout the figures.

FIGS. 36A-36L illustrate exemplary user interfaces for retrying biometric authentication at a credential entry user interface, in accordance with some examples.

FIGS. 37A-37B are flow diagrams illustrating a method for retrying biometric authentication at a credential entry user interface using an electronic device, in accordance with some examples.

### DESCRIPTION OF EMBODIMENTS

The following description sets forth exemplary methods, parameters, and the like. It should be recognized, however, that such description is not intended as a limitation on the scope of the present disclosure but is instead provided as a description of exemplary embodiments.

There is a need for electronic devices that provide efficient methods and interfaces for implementing biometric authentication of biometric features. For example, there is a need for electronic devices that provide a convenient and efficient method for enrolling one or more portions of a biometric feature. For another example, there is a need for electronic devices that provide a quick and intuitive technique for selectively accessing secure data in accordance with biometric authentication. For another example, there is a need for electronic devices that provide a quick and intuitive technique for enabling a function of a device in accordance with biometric authentication. Such techniques can reduce the cognitive burden on a user who enrolls a biometric feature and/or biometrically authenticates with a device, thereby enhancing overall productivity. Further, such techniques can reduce processor and battery power otherwise wasted on redundant user inputs.

Although the following description uses terms "first," "second," etc. to describe various elements, these elements should not be limited by the terms. These terms are only used to distinguish one element from another. For example, a first touch could be termed a second touch, and, similarly, a second touch could be termed a first touch, without departing from the scope of the various described embodiments. The first touch and the second touch are both touches, but they are not the same touch.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch screen displays and/or touchpads), are, optionally, used. It should also be understood that, in some embodiments, the device is not a portable communications device, but is a desktop computer with a touch-sensitive surface (e.g., a touch screen display and/or a touchpad).

In the discussion that follows, an electronic device that includes a display and a touch-sensitive surface is described. It should be understood, however, that the electronic device optionally includes one or more other physical user-interface devices, such as a physical keyboard, a mouse, and/or a joystick.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that is, in some circumstances, otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user. Using tactile outputs to provide haptic feedback to a user enhances the operability of the device and makes the user-device interface more efficient (e.g., by helping the user to provide proper inputs and reducing user mistakes when operating/interacting with the device) which, additionally, reduces power usage and improves battery life of the device by enabling the user to use the device more quickly and efficiently.

In some embodiments, a tactile output pattern specifies characteristics of a tactile output, such as the amplitude of the tactile output, the shape of a movement waveform of the tactile output, the frequency of the tactile output, and/or the duration of the tactile output.

When tactile outputs with different tactile output patterns are generated by a device (e.g., via one or more tactile output generators that move a moveable mass to generate tactile outputs), the tactile outputs can invoke different haptic sensations in a user holding or touching the device. While the sensation of the user is based on the user's perception of the tactile output, most users will be able to identify changes in waveform, frequency, and amplitude of tactile outputs generated by the device. Thus, the waveform, frequency and amplitude can be adjusted to indicate to the user that different operations have been performed. As such, tactile outputs with tactile output patterns that are designed, selected, and/or engineered to simulate characteristics (e.g., size, material, weight, stiffness, smoothness, etc.); behaviors (e.g., oscillation, displacement, acceleration, rotation, expansion, etc.); and/or interactions (e.g., collision, adhesion, repulsion, attraction, friction, etc.) of objects in a given environment (e.g., a user interface that includes graphical features and objects, a simulated physical environment with virtual boundaries and virtual objects, a real physical environment with physical boundaries and physical objects, and/or a combination of any of the above) will, in some circumstances, provide helpful feedback to users that reduces input errors and increases the efficiency of the user's operation of the device. Additionally, tactile outputs are, optionally, generated to correspond to feedback that is unrelated to a simulated physical characteristic, such as an input threshold or a selection of an object. Such tactile outputs will, in some circumstances, provide helpful feedback to users that reduces input errors and increases the efficiency of the user's operation of the device.

In some embodiments, a tactile output with a suitable tactile output pattern serves as a cue for the occurrence of an event of interest in a user interface or behind the scenes in a device. Examples of the events of interest include activation of an affordance (e.g., a real or virtual button, or toggle switch) provided on the device or in a user interface, success or failure of a requested operation, reaching or crossing a boundary in a user interface, entry into a new state, switching of input focus between objects, activation of a new mode, reaching or crossing an input threshold, detection or recognition of a type of input or gesture, etc. In some embodiments, tactile outputs are provided to serve as a warning or an alert for an impending event or outcome that would occur unless a redirection or interruption input is timely detected. Tactile outputs are also used in other contexts to enrich the user experience, improve the accessibility of the device to users with visual or motor difficulties or other accessibility needs, and/or improve efficiency and functionality of the user interface and/or the device. Tactile outputs are optionally accompanied with audio outputs and/or visible user interface changes, which further enhance a user's experience when the user interacts with a user interface and/or the device, and facilitate better conveyance of information regarding the state of the user interface and/or the device, and which reduce input errors and increase the efficiency of the user's operation of the device.

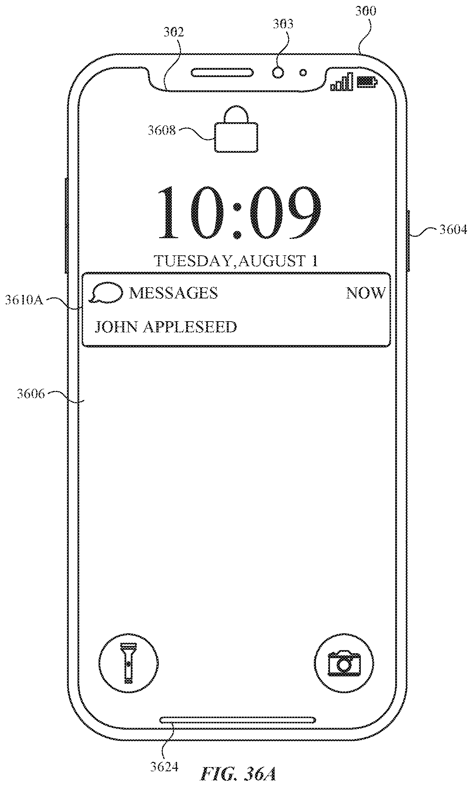

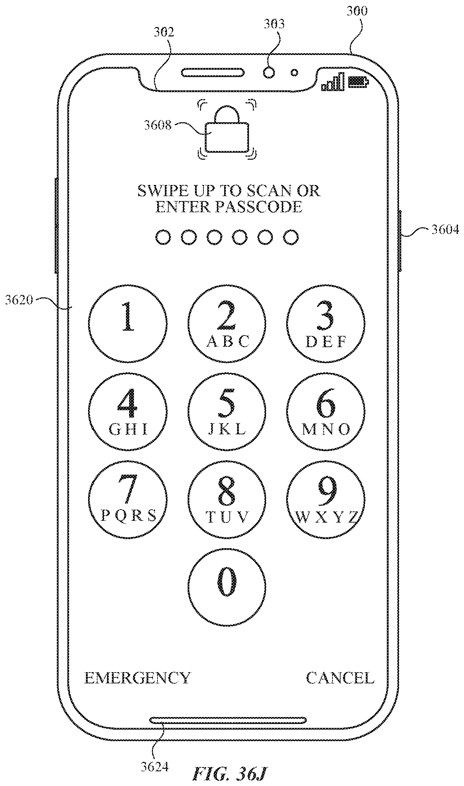

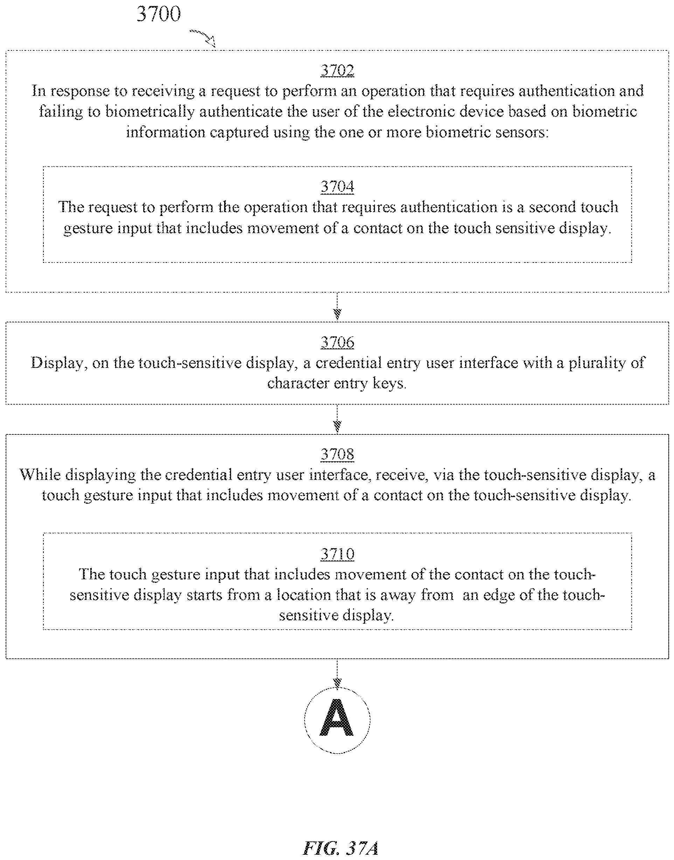

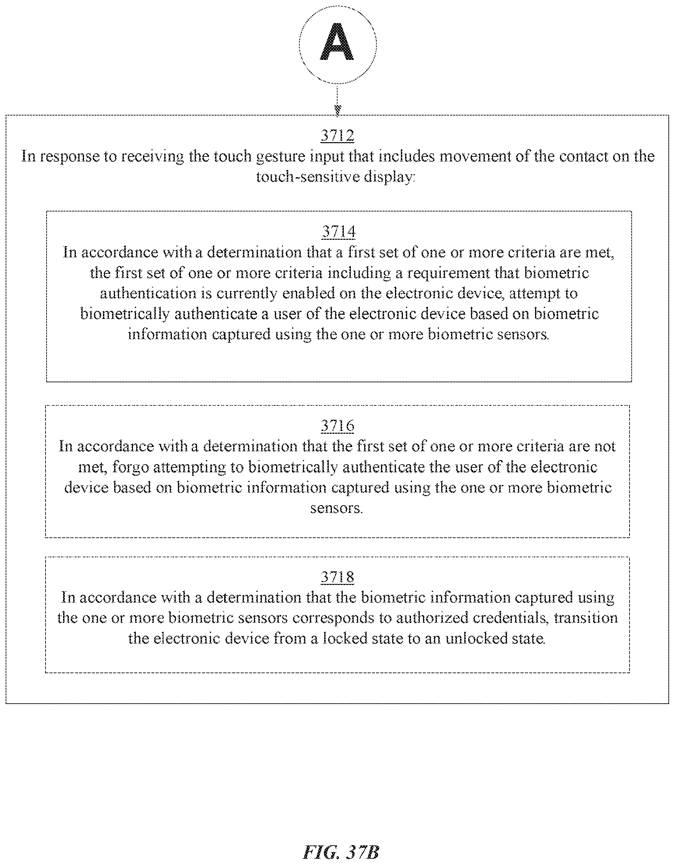

FIGS. 36A-36L illustrate exemplary user interfaces for retrying biometric authentication at a credential entry user interface, in accordance with some examples. The user interfaces in these figures are used to illustrate the processes described below, including the processes in FIGS. 37A-37B.

FIG. 36A illustrates electronic device 3600 (e.g., portable multifunction device 100, device 300, device 500). In the exemplary examples illustrated in FIGS. 36A-36L, electronic device 3600 is a smartphone. In other examples, electronic device 3600 can be a different type of electronic device, such as a wearable device (e.g., a smartwatch). Electronic device 3600 includes display 3602, one or more input devices (e.g., touchscreen of display 3002, button 3604, and a microphone), and a wireless communication radio. In some examples, the electronic device includes a plurality of cameras. In some examples, the electronic device includes only one camera. In FIG. 36A, the electronic device includes biometric sensor 3603. In some examples, the biometric sensor is one or more biometric sensors that can include a camera, such as an infrared camera, a thermographic camera, or a combination thereof. In some examples, biometric sensor 3603 is biometric sensor 703. In some examples, the one or more biometric sensors include one or more fingerprint sensors (e.g., a fingerprint sensor integrated into a button). In some examples, the device further includes a light-emitting device (e.g., light projector), such as an IR flood light, a structured light projector, or a combination thereof. The light-emitting device is, optionally, used to illuminate the biometric feature (the face) during capture of biometric data of biometric features by the one or more biometric sensors.

At FIG. 36A, electronic device 3600 displays locked state user interface (UI) 3606 including lock icon 3608, which provides an indication to the user that electronic device 3600 is in a locked state. Because electronic device 3600 is in a locked state, the user is unable to view the restricted content of notification 3610A (e.g., the message from John Appleseed).

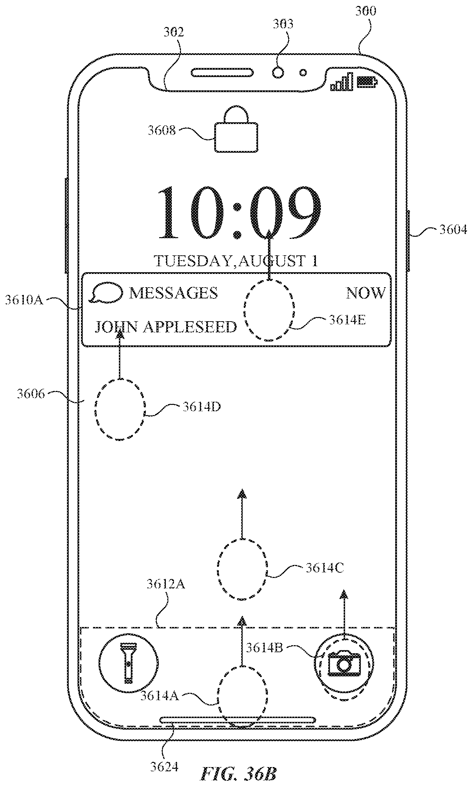

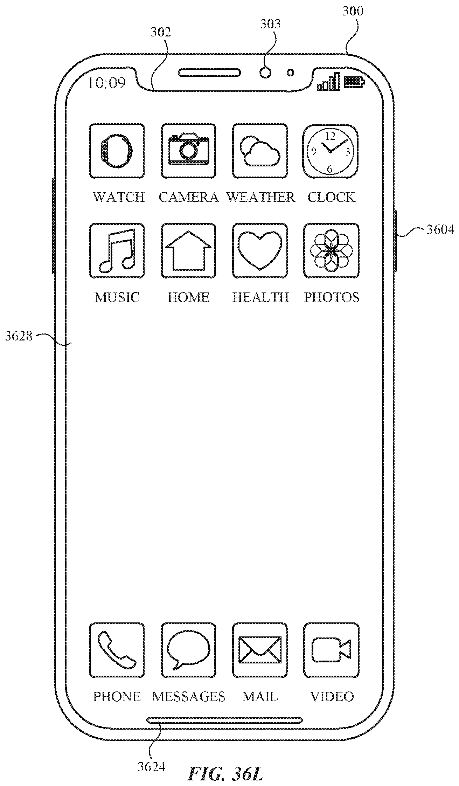

At FIG. 36B, the user wishes to unlock electronic device 3600 to access restricted content on the device (e.g., the message from John Appleseed, home screen 3628 of FIG. 36L, the most recently used application). Unlocking the device requires successful authentication of the user. To request unlocking of the device, the user performs an upward swipe starting from within region 3612A, which is a predefined region adjacent to the bottom edge of display 3602.

While displaying locked state UI 3606, electronic device 3600 receives input 3614A (e.g., an upward swipe). While displaying locked state UI 3606, electronic device 3600 requires that an upward swipe start from within region 3612A to trigger a request to unlock the device. In response to receiving input 3614A, electronic device 3600 determines whether input 3614A starts from within region 3612A.

Upon detecting input 3614A (e.g., an input that begins within region 3612A), electronic device 3600 initiates biometric authentication, and determines whether biometric authentication is currently enabled (or available for use) on the device. Biometric authentication can be unavailable for a variety of reasons including, for example, that biometric authentication has failed more than a predetermined number of times (e.g., 5, 10, 15) since the last successful authentication with the device.

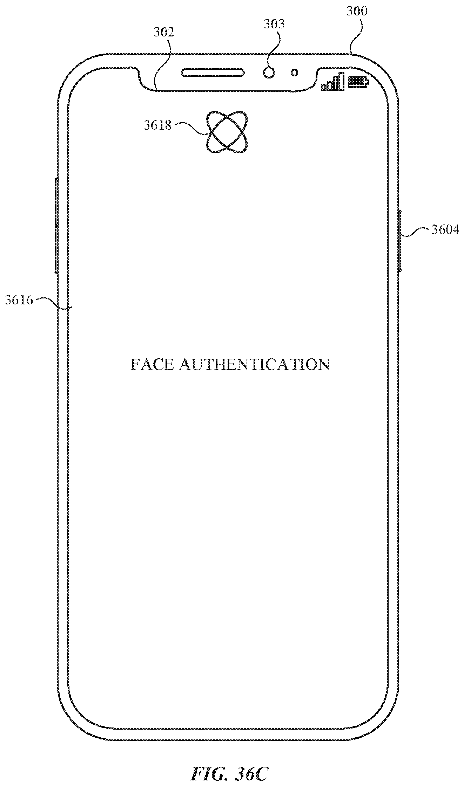

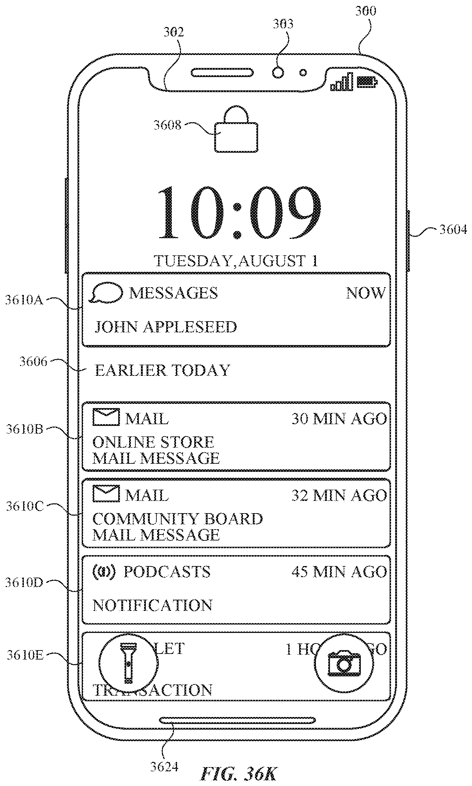

In some examples, instead of receiving input 3614A, electronic device 3600 receives any one of inputs 3614B-E (e.g., swipe inputs that move a similar distance as input 3614A). Like input 3614A, each of inputs 3614B-E is an upward swipe. In some examples, because input 3614B also starts within region 3614A, electronic device 3600 treats input 3614A and 3614B the same (e.g., electronic device 3600 has the same response to both inputs). In contrast, in some examples, the response of electronic device 3600 to inputs 3614C-E is different from the response to inputs 3614A-B. Specifically, in some examples, in response to receiving any one of inputs 3614C-E, electronic device 3600 does not initiate biometric authentication, as described below with respect to FIG. 36C. Instead, electronic device 3600 displays one or more notifications (e.g., 3610A-E) (e.g., unread notifications) while maintaining the device in a locked state, as depicted in FIG. 36K (e.g., by scrolling a portion of the wake screen user interface (e.g., 3606) to display one or more notifications that were previously not visible on the display where the amount of scrolling is optionally determined based on a magnitude or velocity of movement of the contact).

At FIG. 36C, in response to input 3614 and upon determining that biometric authentication is currently enabled, electronic device 3600 attempts to biometrically authenticate the user (e.g., attempts to match information about a user's face obtained using biometric sensor 3603 with stored authorized credentials). While attempting to biometrically authenticate the user, electronic device 3600 displays (e.g., replaces display of locked state UI 3606 with) interstitial interface 3616 with authentication glyph 3618. Authentication glyph 3618, which includes a plurality of rings that rotate about an axis that is parallel to the display so that they appear to rotate out of a z axis of the display, provides an indication to the user that biometric authentication is being performed.

While attempting to biometrically authenticate the user, electronic device 3600 uses biometric sensor 3603 to determine whether certain biometric authentication criteria have been met. More specifically, electronic device 3600 captures and processes (e.g., analyzes) the biometric data from biometric sensor 3603 to determine, based on the biometric data, whether the biometric feature (or a portion thereof) satisfies biometric authentication criteria (e.g., determine whether the biometric data matches, within a threshold, a biometric template (e.g., stored authorized credentials)). After initiating biometric authentication, electronic device 3600 determines that biometric authentication has failed (e.g., the biometric data from biometric sensor 3603 does not match the stored authorized credentials).

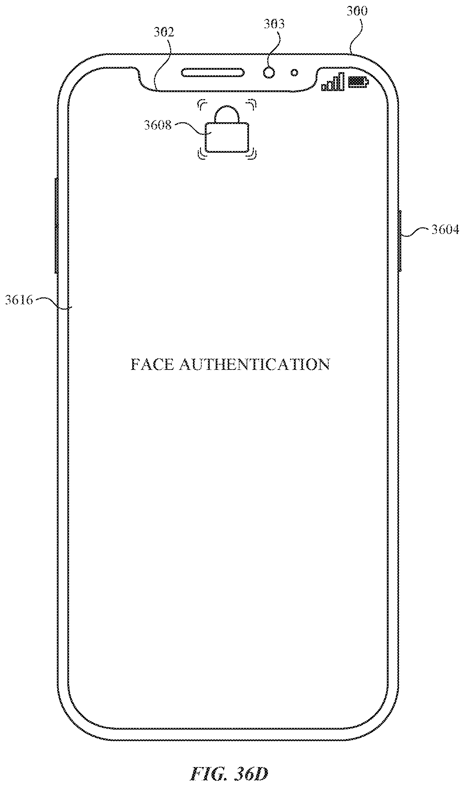

At FIG. 36D, upon determining that biometric authentication has failed, electronic device 3600 displays an animation of lock icon 3608 alternating between different positions to simulate a "shake" effect. This "shake" animation provides an indication to the user that electronic device 3600 was unable to biometrically authenticate the user.

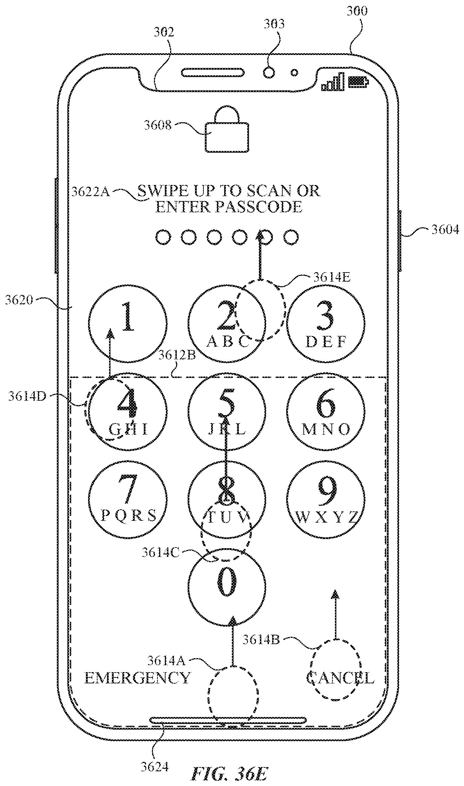

As depicted in FIG. 36E, further in response to determining that biometric authentication has failed, electronic device 3600 displays (e.g., replaces display of interstitial interface 3616 with) passcode entry UI 3620, which provides an alternative (e.g., non-biometric) method of authenticating the user at electronic device 3600. Passcode entry UI 3620 includes lock icon 3608 and a plurality of input keys for inputting (or entering) a password or passcode. Passcode entry UI 3620 also includes prompt 3622A, which prompts the user to either swipe up to retry biometric authentication or enter a passcode (or password) to authenticate the user (e.g., non-biometrically). Electronic device 3600 displays prompt 3622A upon determining that biometric authentication is currently enabled on the device. Additionally, upon determining that biometric authentication is currently enabled, electronic device 3600 displays unlock indication 3624, which provides an indication of an approximate location on display 3602 from which a user can start an upward swipe to retry biometric authentication.

At FIG. 36E, the user seeks to retry biometric authentication rather than input a password or passcode to authenticate. While displaying passcode entry UI 3620, electronic device 3600 receives input 3614C, which starts outside region 3612A of FIG. 36B. Nevertheless, input 3614C triggers retrying biometric authentication because input 3614C starts from within region 3612B. Notably, region 3612B is larger than region 3612A because the parameters for where the upward swipe must start to initiate biometric authentication is relaxed on passcode entry UI 3620 in comparison to locked state UI 3606.

In some examples, instead of receiving input 3614C, electronic device receives any one of inputs 3614A-B and 3614D-E. In some examples, in light of the relaxed parameters on passcode entry UI 3620, all but input 3614E would trigger retrying biometric authentication. In some examples, in response to receiving input 3614E, electronic device 3600 determines that input 3614E does not start from within region 3612B, and in response, does not retry biometric authentication.

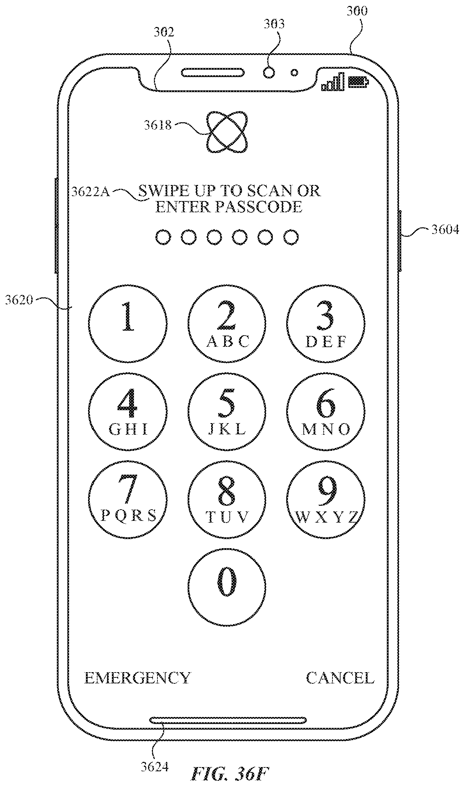

At FIG. 36F, in response to receiving input 3614C, electronic device 3600 device determines that input 3614 starts from within region 3612B. Upon determining that input 3614 starts from within region 3612B, electronic device 3600 retries biometric authentication. While retrying biometric authentication, electronic device 3600 displays (e.g., replaces display of lock icon 3608 with) authentication glyph 3618. Authentication glyph 3618 provides an indication to the user that biometric authentication is being performed.

While retrying biometric authentication, electronic device 3600 determines that biometric authentication is successful (e.g., the biometric data obtained using biometric sensor 3603 matches the stored authorized credentials).

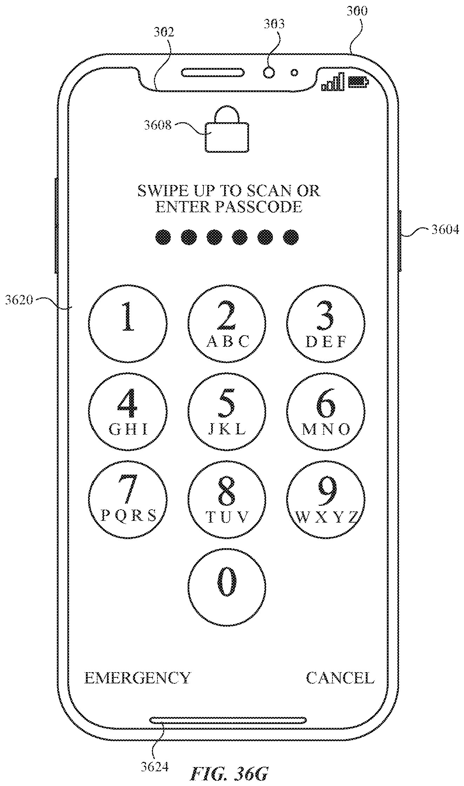

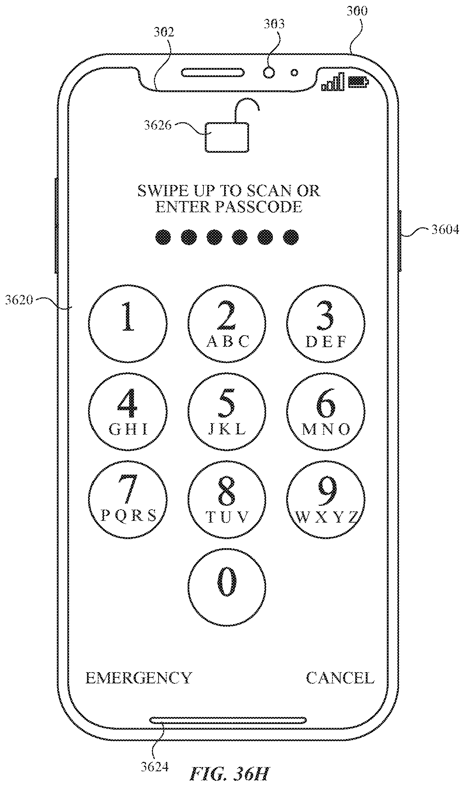

At FIGS. 36G-36H, upon determining that biometric authentication is successful, electronic device 3600 transitions from a locked state to an unlocked state. Electronic device 3600 provides an indication of this transition by displaying an animation of lock icon 3608 transitioning to unlock icon 3626 of FIG. 36H, which provides an indication that the electronic device 3600 has transitioned to an unlocked state. Additionally, upon determining that biometric authentication is successful and after displaying unlock icon 3626, electronic device 3600 provides access to restricted content. For example, electronic device 3600 displays home screen 3628 of FIG. 36L or the most recently used application (e.g., a user interface of the most recently used application (e.g., messaging application interface 2616 of FIG. 26G)).

In some examples, instead of determining at FIG. 36C that biometric authentication has failed, electronic device 3600 determines that biometric authentication is successful. In some examples, upon determining that biometric authentication is successful, electronic device 3600 transitions to an unlocked state and displays unlock icon 3626, as described above with respect to FIGS. 36G-36H. Additionally, in some examples, upon determining that biometric authentication is successful and after displaying unlock icon of FIG. 36H, electronic device 3600 displays home screen 3628. (Home screen 3628 can include some or all of the features of home screen interface 2614 of FIG. 26D.) In some examples, upon determining that biometric authentication is successful and after displaying unlock icon 3626, electronic device 3600 displays the most recently used application (e.g., messaging application interface 2616 of FIG. 26G).

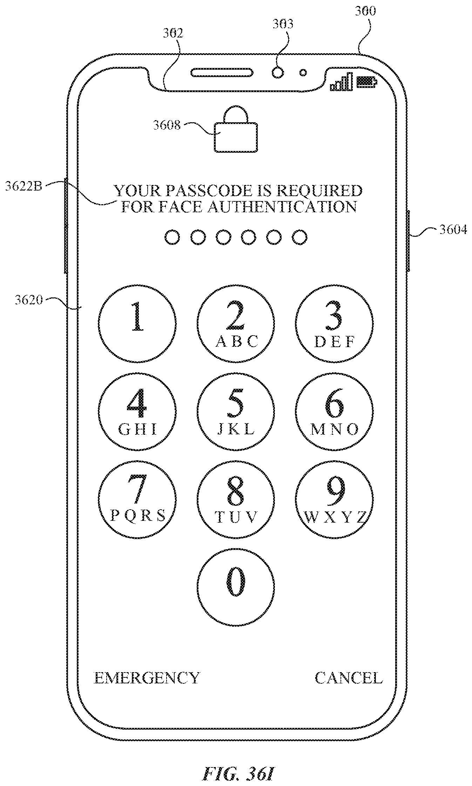

In some examples, instead of determining that biometric authentication is enabled on the device as described above with respect to FIGS. 36B-36C, electronic device 3600 determines that biometric authentication is not currently enabled (e.g., because biometric authentication has been (manually) disabled by the user or because a predetermined biometric authentication have been attempted without success). In some examples, upon determining that biometric authentication is not currently enabled, electronic device 3600 displays prompt 3622B of FIG. 36I instead of prompt 3622A of FIG. 36E. In contrast to prompt 3622A, prompt 3622B only prompts the user to enter a passcode (or password) to authenticate the user without prompting the user to swipe to retry biometric authentication. Additionally, in some examples, upon determining that biometric authentication is not currently enabled, electronic device 3600 does not display unlock indication 3624, as depicted in FIG. 36I. As described above, unlock indication 3624 provides an indication of an approximate location on display 3602 from which a user can start an upward swipe to retry biometric authentication. In some examples, because biometric authentication is not currently enabled, electronic device 3600 does not display unlock indication 3624.

In some examples, instead of determining at FIG. 36F that biometric authentication is successful, electronic device 3600 determines that biometric authentication has failed. In some examples, upon determining that biometric authentication has failed, electronic device 3600 displays an animation of lock icon 3608 alternating between different positions to simulate a "shake" effect (instead of displaying a transition to an unlocked state as described above with respect to FIGS. 36G-36H). As described above, this "shake" animation provides an indication to the user that electronic device 3600 was unable to biometrically authenticate the user.

FIGS. 37A-37B are flow diagrams illustrating a method for retrying biometric authentication at a credential entry user interface using an electronic device, in accordance with some examples. Method 3700 is performed at an electronic device (e.g., 100, 300, 500, 3600) with a touch-sensitive display (e.g., 3602) and one or more biometric sensors (e.g., 3603) (e.g., a first biometric sensor of a device with a plurality of biometric sensors) (e.g., a fingerprint sensor, a contactless biometric sensor (e.g., a biometric sensor that does not require physical contact, such as a thermal or optical facial recognition sensor), an iris scanner). In some examples, the one or more biometric sensors include one or more cameras.

As described below, method 3700 provides an intuitive way for retrying biometric authentication at a credential entry user interface using an electronic device. The method reduces the cognitive burden on a user for retrying biometric authentication, thereby creating a more efficient human-machine interface. For battery-operated computing devices, enabling a user to retry biometric authentication faster and more efficiently conserves power and increases the time between battery charges.

The electronic device (e.g., 100, 300, 500, 3600) displays (3706), on the touch-sensitive display (e.g., 3602), a credential entry (e.g., passcode, password, pattern) user interface (e.g., 3620) with a plurality of character entry keys. In some examples, the credential entry user interface includes a virtual keypad or virtual keyboard. In some examples, the virtual keypad or virtual keyboard includes a plurality of character entry keys. In some examples, while displaying the credential entry user interface (e.g., 3620), the electronic device receives input corresponding to one or more character entry keys of the plurality of character entry keys. In some examples, in response to (or subsequent to) receiving the input corresponding to the plurality of character entry keys, the electronic device transitions from a locked state (e.g., corresponding to 3606) to an unlocked state (e.g., corresponding to 3628) in accordance with a determination that the received input corresponds to (or matches) authorized credentials (e.g., a stored passcode or password).

While displaying the credential entry user interface (e.g., 3620), the electronic device receives (3708), via the touch-sensitive display (e.g., 3602), a touch gesture input (e.g., 3614A-B) (e.g., a swipe at a predefined location) that includes movement of a contact on the touch-sensitive display.

In response (3712) to receiving the touch gesture input that includes movement of the contact on the touch-sensitive display and in accordance (3714) with a determination that a first set of one or more criteria are met, the first set of one or more criteria including a requirement that biometric authentication is currently enabled on the electronic device, the electronic device attempts to biometrically authenticate a user of the electronic device based on biometric information captured using the one or more biometric sensors. In some examples, the first set of one or more criteria only includes one criterion. In some examples, biometric authentication can become unavailable (or not enabled on the electronic device) when one or more of the following conditions have been met: the electronic device has not been successfully authenticated since being turned on or restarted; the electronic device has not been unlocked for more than a predetermined amount of time (e.g., 48 hours); the passcode has not been used to unlock the device for more than a predetermined amount of time (e.g., 156 hours); biometric authentication using a biometric feature (e.g., face, fingerprint) has not been used to unlock device for more than predetermined amount of time (e.g., 4 hours); the electronic device has received a remote lock command; biometric authentication has failed more than a predetermined number of times (e.g., 5, 10, 15) since the last successful authentication with the device; and the electronic device has received a power off and/or emergency SOS command. In some examples, the touch gesture input is a request to unlock electronic device 3600. Providing the user with the capability to retry biometric authentication by performing a touch gesture input at the credential entry user interface enhances the operability of the device by providing additional control of the device without cluttering the UI with additional displayed controls. Providing this capability enhances the operability of the device and makes the user-device interface more efficient (e.g., by helping the user to provide proper inputs and reducing user mistakes when operating/interacting with the device) which, additionally, reduces power usage and improves battery life of the device by enabling the user to use the device more quickly and efficiently.

In some examples, in response (3712) to receiving the touch gesture input that includes movement of the contact on the touch-sensitive display and in accordance (3716) with a determination that the first set of one or more criteria are not met (e.g., because biometric authentication is not currently enabled on the device), the electronic device forgoes attempting to biometrically authenticate the user of the electronic device based on biometric information captured using the one or more biometric sensors (e.g., 3603). Forgoing attempting to biometrically authenticate the user when biometric authentication is not enabled improves the security of the device by preventing fraudulent use of the device.

In some examples, displaying the credential entry user interface (e.g., 3620) occurs in response to receiving (3702) a request to perform an operation that requires authentication (e.g., a request to unlock the electronic device (e.g., 3614A-B) (e.g., a swipe starting from an edge (e.g., bottom edge) of the display or starting from within a predefined region (e.g., lower portion) of the display)) and failing to biometrically authenticate the user of the electronic device based on biometric information captured using the one or more biometric sensors. In some examples, the electronic device (e.g., 100, 300, 500, 3600) fails to biometrically authenticate the user of the electronic device when the biometric information captured using the one or more biometric sensors does not correspond to (or match) authorized credentials (e.g., stored information about a biometric feature (e.g., face, fingerprint) that are authorized for use in biometric authentication). Displaying the credential entry user interface when a set of conditions has been met provides the user with the capability to authenticate via an alternative method without requiring the user to explicitly request that the credential entry user interface be displayed Performing an operation when a set of conditions has been met without requiring further user input enhances the operability of the device and makes the user-device interface more efficient (e.g., by helping the user to provide proper inputs and reducing user mistakes when operating/interacting with the device) which, additionally, reduces power usage and improves battery life of the device by enabling the user to use the device more quickly and efficiently.

In some examples, the request to perform the operation that requires authentication (e.g., 3614A-B) is a second touch gesture input (3704) that includes movement of a contact on the touch sensitive display (e.g., a swipe starting from an edge (e.g., bottom edge) of the display or starting from within a predefined region (e.g., 3612A) (e.g., lower portion) of the display). In some examples, the set of one or more criteria includes a requirement that the touch gesture input starts at a first region (e.g., 3612A) of the display (e.g., a region along a bottom edge of the display) and ends (or progresses through) a second region of the display (e.g., a region above the region along the bottom edge of the display (e.g., 3612A)).

In some examples, in accordance with a determination that a second set of one or more criteria are met, the second set of one or more criteria including a requirement that biometric authentication is currently enabled on the electronic device, displaying the credential entry user interface (e.g., 3620) includes displaying, on the touch-sensitive display (e.g., 3602), an indication (e.g., 3622A) (e.g., text, graphics, icons) to perform a gesture on the touch-sensitive display to attempt biometrically authenticating the user. In some examples, in accordance with a determination that the second set of one or more criteria are not met, the electronic device forgoes displaying the indication to perform the gesture on the touch-sensitive display to attempt biometrically authenticating the user. In some examples, the second set of one or more criteria is the same as the first set of one or more criteria. In some examples, the second set of one or more criteria only includes one criterion. Displaying an indication to perform a gesture when biometric authentication is available provides the user with feedback as to the current state of the device (e.g., that biometric authentication is available) and prompts the user to perform the gesture associated with the indication. Moreover, not displaying the indication to perform the gesture when biometric authentication is not available also provides the user with feedback as to the current state of the device (e.g., that biometric authentication is not available). Providing improved visual feedback to the user enhances the operability of the device and makes the user-device interface more efficient (e.g., by helping the user to provide proper inputs and reducing user mistakes when operating/interacting with the device) which, additionally, reduces power usage and improves battery life of the device by enabling the user to use the device more quickly and efficiently.

In some examples, in accordance with a determination that a third set of one or more criteria are met, the third set of one or more criteria including a requirement that biometric authentication is currently enabled on the electronic device, displaying the credential entry user interface (e.g., 3620) includes displaying, on the touch-sensitive display (e.g., 3602), a user interface element (e.g., 3624) (e.g., a graphical element, a horizontal bar, a home affordance, an indication of a location from which a user should swipe to attempt biometric authentication) adjacent to an edge of the touch-sensitive display (e.g., bottom edge of the display). In some examples, the third set of one or more criteria is the same as the first set of one or more criteria. In some examples, the third set of one or more criteria only includes one criterion. In some examples, in accordance with a determination that the third set of one or more criteria are not met, the electronic device (e.g., 100, 300, 500, 3600) forgoes displaying the user interface element. In some examples, the set of one or more criteria includes a requirement that the touch gesture input starts at a first region (e.g., 3612A) of the display (e.g., a region along a bottom edge of the display) and ends at (or progresses through a) a second region of the display (e.g., a region above the region along the bottom edge of the display. In some examples, the user interface element (e.g., 3624) is displayed at a location that corresponds (e.g., that is within) to the first region of the display. Displaying the user interface element adjacent to the edge of the display when biometric authentication is available provides feedback to the user about the current state of the device and feedback as to how the user can request unlocking of the device. Providing improved feedback to the user enhances the operability of the device and makes the user-device interface more efficient (e.g., by helping the user to provide proper inputs and reducing user mistakes when operating/interacting with the device) which, additionally, reduces power usage and improves battery life of the device by enabling the user to use the device more quickly and efficiently.

In some examples, while attempting to biometrically authenticate the user of the electronic device based on biometric information captured using the one or more biometric sensors, the electronic device (e.g., 100, 300, 500, 3600) displays, on the touch-sensitive display, an animation with one or more moving elements (e.g., 3618) that indicate that biometric authentication is occurring (e.g., displaying an animation that includes one or more rings (e.g., a graphical icon) moving on the display). In some examples, the animation provides an indication that biometric information is being processed. In some examples, the animation includes rings rotating around an object (e.g., a sphere). In some examples, the sphere is visible. In some examples, the sphere is not visible. Displaying one or more moving elements indicating that biometric authentication is occurring provides the user with feedback about the current state of the device (e.g., biometric authentication is being performed) and that the user does not need to take any action at this time. Providing improved feedback to the user enhances the operability of the device and makes the user-device interface more efficient (e.g., by helping the user to provide proper inputs and reducing user mistakes when operating/interacting with the device) which, additionally, reduces power usage and improves battery life of the device by enabling the user to use the device more quickly and efficiently.

In some examples, displaying the animation with the one or more moving elements includes transitioning from the animation with one or more moving elements to a lock icon (e.g., 3608) (e.g., an icon indicative of a locked state). In some examples, after transitioning from the animation with one or more moving elements (e.g., 3618) to the lock icon and in accordance with a determination that the biometric information captured using the one or more biometric sensors corresponds to (e.g., matches) authorized credentials (e.g., stored information about a biometric feature (e.g., face, fingerprint) that are authorized for use in biometric authentication), the electronic device transitions from a locked state to an unlocked state. In some examples, transitioning the electronic device from a locked state to an unlocked state includes displaying an animation of the lock icon transitioning to an unlock icon (e.g., 3626) (e.g., an icon indicative of an unlocked state). In some examples, after transitioning from the animation with one or more moving elements to the lock icon and in accordance with a determination that the biometric information captured using the one or more biometric sensors does not correspond to (e.g., does not match) the authorized credentials, the electronic device displays, on the touch-sensitive display (e.g., 3602), an animation with the lock icon (e.g., 3608) alternating between a first position and a second position, the second position being different from the first position. In some examples, the animation with the lock icon is an animation of the lock icon shaking (e.g., side to side, rotating back and forth). In some examples, the electronic device displays an animation involving the lock icon to indicate that biometric authentication has failed. In some examples, a tactile output is provided in combination with the shaking lock icon. In some examples, no tactile output is provided. In some examples, in accordance with a determination that the biometric information captured using the one or more biometric sensors does not correspond to or does not match the authorization credentials, the electronic device (e.g., 100, 300, 500, 3600) maintains the locked state of the electronic device. Displaying an animation of the lock icon transitioning to an unlock icon provides the user with feedback about the current state of the device (e.g., that biometric authentication is successful, that the device has been unlocked, that the user can now access restricted content). Moreover, displaying an animation of the lock icon shaking provides the user with feedback about the current state of the device (e.g., that biometric authentication has failed) and prompts the user to take further action. Providing improved feedback to the user enhances the operability of the device and makes the user-device interface more efficient (e.g., by helping the user to provide proper inputs and reducing user mistakes when operating/interacting with the device) which, additionally, reduces power usage and improves battery life of the device by enabling the user to use the device more quickly and efficiently.

In some examples, the touch gesture input that includes movement of the contact on the touch-sensitive display starts (3710) from a location that is away from (e.g., not substantially near) an edge of the touch-sensitive display (e.g., bottom edge of the display). In some examples, the location that is away from the edge of the touch-sensitive display (e.g., 3602) includes a location closer to the center of the display than to the edge. In some examples, the location that is away from the edge of the touch-sensitive display includes a location that is more than a threshold distance from the edge of the display (or outside a predefined region (e.g., 3612A)). In some examples, the threshold distance (or predefined region) is used on the wake screen to determine whether to dismiss the wake screen when a swipe input starts less than the threshold distance away from the edge of the display. In some examples, the threshold distance (or predefined region (e.g., 3612A)) is used to perform a different operation on the wake screen such as scrolling content (e.g., 3610A-E) on the wake screen when a swipe input starts more than the threshold distance away from the edge of the display (or outside a predefined region (e.g., 3612A)). In some examples, the parameters for where the touch gesture input must start are relaxed for the credential entry user interface (e.g., 3620). Relaxing the parameters at the credential entry user interface for where the touch gesture input must start enhances the operability of the device by allowing less precise gestures to initiate biometric authentication. The parameters are relaxed because the user has already conveyed a desire to initiate biometric authentication. As a result, there is less risk at the credential entry user interface that the user does not intend to initiate biometric authentication. Allowing less precise gesture to initiate biometric authentication after the user has already conveyed a desire to initiate biometric authentication enhances the operability of the device and makes the user-device interface more efficient which, additionally, reduces power usage and improves battery life of the device by limiting the performance of restricted operations.

In some examples, in response to receiving the touch gesture input (e.g., 3614C-E) that includes movement of the contact on the touch-sensitive display starting from the location that is away from the edge of the touch-sensitive display and in accordance (3718) with a determination that the biometric information captured using the one or more biometric sensors corresponds to (e.g., matches) authorized credentials (e.g., stored information about a biometric feature (e.g., face, fingerprint) that are authorized for use in biometric authentication), the electronic device transitions from a locked state to an unlocked state. In some examples, transitioning the electronic device to an unlocked state includes displaying an unlocked user interface (e.g., a user interface indicative of an unlocked state, such as a home screen (e.g., 3628) or a most recently used application).

In some examples, prior to displaying the credential entry user interface, the electronic device (e.g., 100, 300, 500, 3600) displays, on the touch-sensitive display (e.g., 3602), a lock user interface (e.g., 3606) (e.g., a user interface indicative of a locked state of the electronic device, a wake screen, a lock screen). In some examples, the lock user interface is different from the credential entry use interface (e.g., 3620). In some examples, while displaying the lock user interface, the electronic device receives, via the touch-sensitive display (e.g., 3602), a touch gesture input (e.g., 3614A-B) with a starting location (e.g., an upward swipe). In response to receiving the touch gesture input with the starting location and in accordance with a determination that a fourth set of one or more criteria are met, the fourth set of one or more criteria including a requirement that the starting location of the touch gesture input is located substantially near an edge (e.g., within a predefined region (e.g., 3612A), within a predefined distance from the edge; a location closer to the edge than to the center of the display) of the touch-sensitive display, the electronic device initiates biometric authentication. In some examples, the fourth set of one or more criteria only includes one criterion. In some examples, initiating biometric authentication includes attempting to biometrically authenticate a user of the electronic device based on biometric information captured using the one or more biometric sensors. In some examples, in response to receiving the touch gesture input with the starting location and in accordance with a determination that the fourth set of one or more criteria are not met, the electronic device forgoes initiating biometric authentication.

## Claims

1. A method (3700), comprising:
at an electronic device with a touch-sensitive display and one or more biometric sensors:
while the device is in a locked state, displaying (3706), on the touch-sensitive display, a credential entry user interface with a plurality of character entry keys in response to failing to biometrically authenticate a user of the electronic device;
while displaying the credential entry user interface, receiving (3708), via the touch-sensitive display, a sequence of one or more touch inputs; and
in response (3712) to receiving the sequence of one or more touch inputs:
in accordance with a determination (3714) that the sequence of one or more touch inputs includes movement of a contact on the touch-sensitive display, wherein movement of the contact on the touch-sensitive display includes a swipe, and meets a first set of one or more criteria, the first set of one or more criteria including a requirement that biometric authentication is currently enabled on the electronic device, attempting to biometrically authenticate the user of the electronic device based on biometric information captured using the one or more biometric sensors, wherein the biometric information captured using the one or more biometric sensors corresponds to a face; and
in accordance with a determination that the sequence of one or more touch inputs includes input of a sequence of characters via selection of two or more of the plurality of character entry keys and corresponds to a valid password or passcode, transitioning the device from the locked state to an unlocked state; and
in accordance with a determination that the sequence of one or more touch inputs includes input of a sequence of characters via selection of two or more of the plurality of character entry keys and does not correspond to a valid password or passcode, maintaining the device in the locked state.

2. The method of claim 1, further comprising, in response to receiving the touch gesture input that includes movement of the contact on the touch-sensitive display:
in accordance with a determination that the first set of one or more criteria are not met, forgoing attempting to biometrically authenticate the user of the electronic device based on biometric information captured using the one or more biometric sensors.

3. The method of any of claims 1-2, wherein displaying the credential entry user interface occurs in response to receiving a request to perform an operation that requires authentication and failing to biometrically authenticate the user of the electronic device based on biometric information captured using the one or more biometric sensors.

4. The method of claim 3, wherein the request to perform the operation that requires authentication is a second touch gesture input that includes movement of a contact on the touch sensitive display.

5. The method of any of claims 1-4, wherein displaying the credential entry user interface includes:
in accordance with a determination that a second set of one or more criteria are met, the second set of one or more criteria including a requirement that biometric authentication is currently enabled on the electronic device, displaying, on the touch-sensitive display, an indication to perform a gesture on the touch-sensitive display to attempt biometrically authenticating the user, and
in accordance with a determination that the second set of one or more criteria are not met, forgoing displaying the indication to perform the gesture on the touch-sensitive display to attempt biometrically authenticating the user.

6. The method of any of claims 1-5, wherein displaying the credential entry user interface includes:
in accordance with a determination that a third set of one or more criteria are met, the third set of one or more criteria including a requirement that biometric authentication is currently enabled on the electronic device, displaying, on the touch-sensitive display, a user interface element adjacent to an edge of the touch-sensitive display.

7. The method of any of claims 1-6, further comprising:
while attempting to biometrically authenticate the user of the electronic device based on biometric information captured using the one or more biometric sensors, displaying, on the touch-sensitive display, an animation with one or more moving elements that indicate that biometric authentication is occurring.

8. The method of claim 7, wherein displaying the animation with the one or more moving elements includes transitioning from the animation with one or more moving elements to a lock icon, the method further comprising, after transitioning from the animation with one or more moving elements to the lock icon:
in accordance with a determination that the biometric information captured using the one or more biometric sensors corresponds to authorized credentials, transitioning the electronic device from a locked state to an unlocked state; and
in accordance with a determination that the biometric information captured using the one or more biometric sensors does not correspond to the authorized credentials, displaying, on the touch-sensitive display, an animation with the lock icon alternating between a first position and a second position, the second position being different from the first position.

9. The method of any of claims 1-8, wherein the touch gesture input that includes movement of the contact on the touch-sensitive display starts from a location that is away from an edge of the touch-sensitive display, the method further comprising, in response to receiving the touch gesture input that includes movement of the contact on the touch-sensitive display:
in accordance with a determination that the biometric information captured using the one or more biometric sensors corresponds to authorized credentials, transitioning the electronic device from a locked state to an unlocked state.

10. The method of any of claims 1-9, further comprising:
prior to displaying the credential entry user interface, displaying, on the touch-sensitive display, a lock user interface;
while displaying the lock user interface, receiving, via the touch-sensitive display, a touch gesture input with a starting location; and
in response to receiving the touch gesture input with the starting location:
in accordance with a determination that a fourth set of one or more criteria are met, the fourth set of one or more criteria including a requirement that the starting location of the touch gesture input is located substantially near an edge of the touch-sensitive display, initiating biometric authentication; and
in accordance with a determination that the fourth set of one or more criteria are not met, forgoing initiating biometric authentication.

11. A computer-readable storage medium storing one or more programs configured to be executed by one or more processors of an electronic device with a touch-sensitive display and one or more biometric sensors, the one or more programs including instructions for performing the method of any of claims 1-10.

12. An electronic device, comprising:
a touch-sensitive display;
one or more biometric sensors;
one or more processors; and
memory storing one or more programs configured to be executed by the one or more processors, the one or more programs including instructions for performing the method of any of claims 1-10.

## Patentansprüche

1. Verfahren (3700), umfassend:
auf einer elektronischen Vorrichtung mit einer berührungsempfindlichen Anzeige und einem oder mehreren biometrischen Sensoren:
während sich die Vorrichtung in einem gesperrten Zustand befindet, Anzeigen (3706) einer Zugangsdateneingabe-Benutzerschnittstelle mit einer Vielzahl von Zeicheneingabetasten auf der berührungsempfindlichen Anzeige in Reaktion auf ein Fehlschlagen einer biometrischen Authentifizierung eines Benutzers der elektronischen Vorrichtung;
während des Anzeigens der Zugangsdateneingabe-Benutzerschnittstelle Empfangen (3708) einer Sequenz von einer oder mehreren Berührungseingaben über den berührungsempfindliche Bildschirm; und
in Reaktion (3712) auf das Empfangen der Sequenz von einer oder mehreren Berührungseingaben:
gemäß einer Bestimmung (3714), dass die Sequenz von einer oder mehreren Berührungseingaben eine Bewegung eines Kontakts auf dem berührungsempfindlichen Bildschirm einschließt, wobei die Bewegung des Kontakts auf der berührungsempfindlichen Anzeige ein Wischen einschließt, und einen ersten Satz von einem oder mehreren Kriterien erfüllt, wobei der erste Satz von einem oder mehreren Kriterien eine Anforderung umfasst, dass die biometrische Authentifizierung gegenwärtig auf der elektronischen Vorrichtung aktiviert ist, Versuchen, den Benutzer der elektronischen Vorrichtung auf Grundlage von biometrischen Informationen, die unter Verwendung des einen oder der mehreren biometrischen Sensoren erfasst wurden, biometrisch zu authentifizieren, wobei die biometrischen Informationen, die unter Verwendung des einen oder der mehreren biometrischen Sensoren erfasst wurden, einem Gesicht entsprechen; und
gemäß einer Bestimmung, dass die Sequenz von einer oder mehreren Berührungseingaben eine Eingabe einer Sequenz von Zeichen über eine Auswahl von zwei oder mehr der Vielzahl von Zeicheneingabetasten einschließt und einem gültigen Passwort oder Zugangscode entspricht, Überführen der Vorrichtung aus dem gesperrten Zustand in einen entsperrten Zustand; und
gemäß einer Bestimmung, dass die Sequenz von einer oder mehreren Berührungseingaben eine Eingabe einer Sequenz von Zeichen über eine Auswahl von zwei oder mehr der Vielzahl von Zeicheneingabetasten einschließt und nicht einem gültigen Passwort oder Zugangscode entspricht, Halten der Vorrichtung in dem gesperrten Zustand.

2. Verfahren nach Anspruch 1, ferner umfassend, in Reaktion auf das Empfangen der Berührungsgesteneingabe, die eine Bewegung des Kontakts auf der berührungsempfindlichen Anzeige einschließt:
gemäß einer Bestimmung, dass der erste Satz von einem oder mehreren Kriterien nicht erfüllt ist, Verzichten auf den Versuch, den Benutzer der elektronischen Vorrichtung auf Grundlage von biometrischen Informationen, die unter Verwendung des einen oder der mehreren biometrischen Sensoren erfasst wurden, biometrisch zu authentifizieren.

3. Verfahren nach einem der Ansprüche 1 bis 2, wobei das Anzeigen der Zugangsdateneingabe-Benutzerschnittstelle in Reaktion auf ein Empfangen einer Anforderung zum Durchführen einer Operation, die eine Authentifizierung erfordert, und ein Fehlschlagen der biometrischen Authentifizierung des Benutzers der elektronischen Vorrichtung auf Grundlage von biometrischen Informationen erfolgt, die unter Verwendung des einen oder der mehreren biometrischen Sensoren erfasst wurden.

4. Verfahren nach Anspruch 3, wobei die Anforderung zum Durchführen der Operation, die eine Authentifizierung erfordert, eine zweite Berührungsgesteneingabe ist, die eine Bewegung eines Kontakts auf der berührungsempfindlichen Anzeige einschließt.

5. Verfahren nach einem der Ansprüche 1 bis 4, wobei das Anzeigen der Zugangsdateneingabe-Benutzerschnittstelle Folgendes einschließt:
gemäß einer Bestimmung, dass ein zweiter Satz von einem oder mehreren Kriterien erfüllt ist, wobei der zweite Satz von einem oder mehreren Kriterien eine Anforderung einschließt, dass die biometrische Authentifizierung gegenwärtig auf der elektronischen Vorrichtung aktiviert ist, Anzeigen eines Hinweises auf der berührungsempfindlichen Anzeige, eine Geste auf der berührungsempfindlichen Anzeige durchzuführen, um zu versuchen, den Benutzer biometrisch zu authentifizieren, und
gemäß einem Bestimmen, dass der zweite Satz von einem oder mehreren Kriterien nicht erfüllt ist, Verzichten auf das Anzeigen des Hinweises, die Geste auf der berührungsempfindlichen Anzeige durchzuführen, um zu versuchen, den Benutzer biometrisch zu authentifizieren.

6. Verfahren nach einem der Ansprüche 1 bis 5, wobei das Anzeigen der Zugangsdateneingabe-Benutzerschnittstelle Folgendes einschließt:
gemäß einem Bestimmen, dass ein dritter Satz von einem oder mehreren Kriterien erfüllt ist, wobei der dritte Satz von einem oder mehreren Kriterien eine Anforderung einschließt, dass die biometrische Authentifizierung gegenwärtig auf der elektronischen Vorrichtung aktiviert ist, Anzeigen eines Benutzerschnittstellenelements auf der berührungsempfindlichen Anzeige in Nachbarschaft zu einem Rand der berührungsempfindlichen Anzeige.

7. Verfahren nach einem der Ansprüche 1 bis 6, ferner umfassend:
während versucht wird, den Benutzer der elektronischen Vorrichtung auf Grundlage von biometrischen Informationen, die unter Verwendung des einen oder der mehreren biometrischen Sensoren erfasst wurden, biometrisch zu authentifizieren, Anzeigen einer Animation mit einem oder mehreren sich bewegenden Elementen, die anzeigen, dass eine biometrische Authentifizierung stattfindet, auf der berührungsempfindlichen Anzeige.

8. Verfahren nach Anspruch 7, wobei das Anzeigen der Animation mit dem einen oder den mehreren sich bewegenden Elementen das Übergehen von der Animation mit einem oder mehreren sich bewegenden Elementen zu einem Sperrsymbol umfasst, wobei das Verfahren nach dem Übergehen von der Animation mit einem oder den mehreren sich bewegenden Elementen zu dem Sperrsymbol ferner umfasst:
gemäß einer Bestimmung, dass die biometrischen Informationen, die unter Verwendung des einen oder der mehreren biometrischen Sensoren erfasst wurden, berechtigten Anmeldeinformationen entsprechen, Überführen der elektronischen Vorrichtung aus einem gesperrten Zustand in einen entsperrten Zustand; und
gemäß einer Bestimmung, dass die unter Verwendung des einen oder der mehreren biometrischen Sensoren erfassten biometrischen Informationen nicht den berechtigten Anmeldeinformationen entsprechen, Anzeigen einer Animation auf dem berührungsempfindlichen Bildschirm, wobei das Sperrsymbol zwischen einer ersten Position und einer zweiten Position wechselt, wobei sich die zweite Position von der ersten Position unterscheidet.

9. Verfahren nach einem der Ansprüche 1 bis 8, wobei die Berührungsgesteneingabe, die eine Bewegung des Kontakts auf der berührungsempfindlichen Anzeige einschließt, an einer Position beginnt, die von einem Rand der berührungsempfindlichen Anzeige entfernt ist, wobei das Verfahren in Reaktion auf das Empfangen der Berührungsgesteneingabe, die eine Bewegung des Kontakts auf der berührungsempfindlichen Anzeige einschließt, ferner umfasst:
gemäß einer Bestimmung, dass die unter Verwendung des einen oder der mehreren biometrischen Sensoren erfassten biometrischen Informationen berechtigten Anmeldeinformationen entsprechen, Überführen der elektronischen Vorrichtung aus einem gesperrten Zustand in einen entsperrten Zustand.

10. Verfahren nach einem der Ansprüche 1 bis 9, ferner umfassend:
vor dem Anzeigen der Zugangsdateneingabe-Benutzerschnittstelle, Anzeigen einer Sperr-Benutzerschnittstelle auf der berührungsempfindlichen Anzeige;
während des Anzeigens der Sperr-Benutzerschnittstelle, Empfangen einer Berührungsgesteneingabe mit einer Startposition über die berührungsempfindlichen Anzeige; und
in Reaktion auf das Empfangen der Berührungsgesteneingabe mit der Startposition:
gemäß einer Bestimmung, dass ein vierter Satz von einem oder mehreren Kriterien erfüllt ist, wobei der vierte Satz von einem oder mehreren Kriterien eine Anforderung einschließt, dass sich die Startposition der Berührungsgesteneingabe im Wesentlichen in der Nähe eines Randes der berührungsempfindlichen Anzeige befindet, Beginnen einer biometrischen Authentifizierung; und
gemäß einer Bestimmung, dass der vierte Satz von einem oder mehreren Kriterien nicht erfüllt ist, Verzichten auf das Beginnen einer biometrischen Authentifizierung.

11. Computerlesbares Speichermedium, das ein oder mehrere Programme speichert, die konfiguriert sind, um von einem oder mehreren Prozessoren einer elektronischen Vorrichtung mit einer berührungsempfindlichen Anzeige ausgeführt zu werden, wobei das eine oder die mehreren Programme Anweisungen zum Durchführen des Verfahrens nach einem der Ansprüche 1 bis 10 einschließen.

12. Elektronische Vorrichtung, umfassend:
einen berührungsempfindlichen Bildschirm;
einen oder mehrere biometrische Sensoren;
einen oder mehrere Prozessoren; und
einen Speicher, auf dem ein oder mehrere Programme gespeichert sind, die konfiguriert sind, um von dem einen oder den mehreren Prozessoren ausgeführt zu werden, wobei das eine oder die mehreren Programme Anweisungen zum Durchführen des Verfahrens nach einem der Ansprüche 1 bis 10 einschließen.

## Revendications

1. Procédé (3700), comprenant:
au niveau d'un dispositif électronique avec un affichage tactile et un ou plusieurs capteurs biométriques :
alors que le dispositif est dans un état verrouillé, l'affichage (3706), sur l'affichage tactile, d'une interface utilisateur d'entrée de justificatif d'identité avec une pluralité de touches d'entrée de caractères en réponse à un échec d'authentification biométrique d'un utilisateur du dispositif électronique ;
tout en affichant l'interface utilisateur d'entrée de justificatif d'identité, la réception (3708), par l'intermédiaire de l'affichage tactile, d'une séquence d'une ou plusieurs saisies tactiles ; et
en réponse (3712) à la réception de la séquence d'une ou plusieurs saisies tactiles :
conformément à une détermination (3714) que la séquence d'une ou plusieurs saisies tactiles inclut un mouvement d'un contact sur l'affichage tactile, dans lequel un mouvement du contact sur l'affichage tactile inclut un balayage rapide, et respecte un premier ensemble d'un ou plusieurs critères, le premier ensemble d'un ou plusieurs critères incluant une exigence selon laquelle une authentification biométrique est actuellement activée sur le dispositif électronique, la tentative d'authentification biométrique de l'utilisateur du dispositif électronique sur la base d'informations biométriques capturées en utilisant le ou les capteurs biométriques, dans lequel les informations biométriques capturées en utilisant le ou les capteurs biométriques correspondent à un visage ; et
conformément à une détermination que la séquence d'une ou plusieurs saisies tactiles inclut la saisie d'une séquence de caractères par l'intermédiaire d'une sélection de deux ou plus parmi la pluralité de touches d'entrée de caractères et correspond à un mot de passe ou code secret valide, le passage du dispositif de l'état verrouillé à un état déverrouillé ; et
conformément à une détermination que la séquence d'une ou plusieurs saisies tactiles inclut la saisie d'une séquence de caractères par l'intermédiaire d'une sélection de deux ou plus parmi la pluralité de touches d'entrée de caractères et ne correspond pas à un mot de passe ou code secret valide, le maintien du dispositif dans l'état verrouillé.

2. Procédé selon la revendication 1, comprenant en outre, en réponse à la réception de la saisie de geste tactile qui inclut un mouvement du contact sur l'affichage tactile :
conformément à une détermination que le premier ensemble d'un ou plusieurs critères ne sont pas respectés, l'abandon de la tentative d'authentification biométrique de l'utilisateur du dispositif électronique sur la base d'informations biométriques capturées en utilisant le ou les capteurs biométriques.

3. Procédé selon l'une quelconque des revendications 1 à 2, dans lequel l'affichage de l'interface utilisateur d'entrée de justificatif d'identité se produit en réponse à la réception d'une demande pour mettre en oeuvre une opération qui exige une authentification et à l'échec d'authentification biométrique de l'utilisateur du dispositif électronique sur la base d'informations biométriques capturées en utilisant le ou les capteurs biométriques.

4. Procédé selon la revendication 3, dans lequel la demande pour mettre en œuvre l'opération qui exige une authentification est une deuxième saisie de geste tactile qui inclut un mouvement d'un contact sur l'affichage tactile.

5. Procédé selon l'une quelconque des revendications 1 à 4, dans lequel l'affichage de l'interface utilisateur d'entrée de justificatif d'identité inclut :
conformément à une détermination qu'un deuxième ensemble d'un ou plusieurs critères sont respectés, le deuxième ensemble d'un ou plusieurs critères incluant une exigence selon laquelle une authentification biométrique est actuellement activée sur le dispositif électronique, l'affichage, sur l'affichage tactile, d'une indication pour mettre en œuvre un geste sur l'affichage tactile pour tenter une authentification biométrique de l'utilisateur, et
conformément à une détermination que le deuxième ensemble d'un ou plusieurs critères ne sont pas respectés, l'abandon de l'affichage de l'indication pour mettre en œuvre le geste sur l'affichage tactile pour tenter une authentification biométrique de l'utilisateur.

6. Procédé selon l'une quelconque des revendications 1 à 5, dans lequel l'affichage de l'interface utilisateur d'entrée de justificatif d'identité inclut :
conformément à une détermination qu'un troisième ensemble d'un ou plusieurs critères sont respectés, le troisième ensemble d'un ou plusieurs critères incluant une exigence selon laquelle une authentification biométrique est actuellement activée sur le dispositif électronique, l'affichage, sur l'affichage tactile, d'un élément d'interface utilisateur adjacent à un bord de l'affichage tactile.

7. Procédé selon l'une quelconque des revendications 1 à 6, comprenant en outre :
tout en tentant d'authentifier biométriquement l'utilisateur du dispositif électronique sur la base d'informations biométriques capturées en utilisant le ou les capteurs biométriques, l'affichage, sur l'affichage tactile, d'une animation avec un ou plusieurs éléments mobiles qui indiquent qu'une authentification biométrique se produit.

8. Procédé selon la revendication 7, dans lequel l'affichage de l'animation avec le ou les éléments mobiles inclut le passage de l'animation avec un ou plusieurs éléments mobiles à une icône de verrouillage, le procédé comprenant en outre, après le passage de l'animation avec un ou plusieurs éléments mobiles à l'icône de verrouillage :
conformément à une détermination que les informations biométriques capturées en utilisant le ou les capteurs biométriques correspondent à des justificatifs d'identité autorisés, le passage du dispositif électronique d'un état verrouillé à un état déverrouillé ; et
conformément à une détermination que les informations biométriques capturées en utilisant le ou les capteurs biométriques ne correspondent pas aux justificatifs d'identité autorisés, l'affichage, sur l'affichage tactile, d'une animation avec l'icône de verrouillage alternant entre une première position et une deuxième position, la deuxième position étant différente de la première position.

9. Procédé selon l'une quelconque des revendications 1 à 8, dans lequel la saisie de geste tactile qui inclut un mouvement du contact sur l'affichage tactile démarre à partir d'un emplacement qui est à l'écart d'un bord de l'affichage tactile, le procédé comprenant en outre, en réponse à la réception de la saisie de geste tactile qui inclut un mouvement du contact sur l'affichage tactile :
conformément à une détermination que les informations biométriques capturées en utilisant le ou les capteurs biométriques correspondent à des justificatifs d'identité autorisés, le passage du dispositif électronique d'un état verrouillé à un état déverrouillé.

10. Procédé selon l'une quelconque des revendications 1 à 9, comprenant en outre :
avant affichage de l'interface utilisateur d'entrée de justificatif d'identité, l'affichage, sur l'affichage tactile, d'une interface utilisateur de verrouillage ;
tout en affichant l'interface utilisateur de verrouillage, la réception, par l'intermédiaire de l'affichage tactile, d'une saisie de geste tactile avec un emplacement de départ ; et
en réponse à la réception de la saisie de geste tactile avec l'emplacement de départ :
conformément à une détermination qu'un quatrième ensemble d'un ou plusieurs critères sont respectés, le quatrième ensemble d'un ou plusieurs critères incluant une exigence selon laquelle l'emplacement de départ de la saisie de geste tactile se situe sensiblement près d'un bord de l'affichage tactile, le lancement d'une authentification biométrique ; et
conformément à une détermination que le quatrième ensemble d'un ou plusieurs critères ne sont pas respectés, l'abandon du lancement de l'authentification biométrique.

11. Support de stockage lisible par ordinateur stockant un ou plusieurs programmes configurés pour être exécutés par un ou plusieurs processeurs d'un dispositif électronique avec un affichage tactile et un ou plusieurs capteurs biométriques, le ou les programmes incluant des instructions pour mettre en œuvre le procédé de l'une quelconque des revendications 1 à 10.

12. Dispositif électronique, comprenant :
un affichage tactile ;
un ou plusieurs capteurs biométriques ;
un ou plusieurs processeurs ; et
de la mémoire stockant un ou plusieurs programmes configurés pour être exécutés par le ou les processeurs, le ou les programmes incluant des instructions pour mettre en œuvre le procédé selon l'une quelconque des revendications 1 à 10.
